# EUROPEAN PATENT APPLICATION

(11) **EP 4 625 389 A1**
(43) Date of publication of application: **01.10.2025**
(21) Application number: 24165769.1
(22) Date of filing: 25.03.2024
(51) Int. Cl.: G08G 1/16, B60W 30/085, B60W 30/095, B60W 60/00

(54) **A METHOD FOR PROTECTING A VEHICLE ON A ROAD**

(71) Applicant: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: WAERN, Jonathan, 41714 GÖTEBORG (SE); DROTT, Daniel, 43141 MÖLNDAL (SE)
(74) Representative: Zacco Sweden AB

(57) **Abstract**

The invention relates to a method for protecting a first vehicle (2) on a road (1). The method comprises receiving a request (10) for a second vehicle (3) to protect the first vehicle when the first vehicle will be operated with a decreased speed along the road or come to a complete stop on the road, and in response to the received request, selecting the second vehicle (3) being an autonomous vehicle not carrying any occupants, requesting the second vehicle (3) to act as a barrier for protecting the first vehicle (2) from being hit by another vehicle, and controlling the second vehicle (3) to be positioned behind the first vehicle (2) in a barrier position at a distance (6) from the first vehicle (2).

## Description

### TECHNICAL FIELD

The invention relates to a method and a control system for protecting a vehicle on a road.

### BACKGROUND

When a vehicle for some reason has to be driven at low speed or needs to stop on a road, such as a highway, there is a real risk that the vehicle is hit by another vehicle driving on the road.

For example, an autonomous vehicle carrying passengers may have some failure when driving on the road, and thus needs to perform a so called MRM (Minimal Risk Maneuver).

MRM can occur due to the vehicle is asking the driver to take over the wheel without receiving any response, sensors are blocked, a communication error, power supply lost or any mechanical fault, for instance.

The MRM usually results in that the vehicle is driven into the side of the road and is stopped or at worst has to be stopped in the lane, which could be extremely dangerous.

### SUMMARY

An objective of the invention is to provide a method for protecting a vehicle on a road, by which method safety for occupants of the vehicle that needs to stop on the road can be increased.

The objective is achieved by a method for protecting a first vehicle on a road, wherein the method comprises receiving a request for a second vehicle to protect the first vehicle when the first vehicle will be operated with a decreased speed along the road or come to a complete stop on the road, and in response to the received request, selecting the second vehicle being an autonomous vehicle not carrying any occupants, requesting the second vehicle to act as a barrier for protecting the first vehicle from being hit by another vehicle, and controlling the second vehicle to be positioned behind the first vehicle in a barrier position at a distance from the first vehicle.

The invention is based on the insight that by such a method, the risk of the first vehicle being hit by another vehicle can be significantly reduced, and thereby the safety can be improved. By the method, any occupants of the first vehicle as well as any cargo of the first vehicle and the first vehicle itself can be protected.

According to one embodiment, the method comprises controlling the second vehicle when being in the barrier position, to perform an action for preventing or mitigating a collision between the second vehicle and another vehicle. Hereby, the safety for the road users can be further increased. For example, the second vehicle can provide an image of a road sign for road users, such as a road sign showing a mandatory travel direction or lane. The second vehicle can also provide warning signals by light and/or sound for alerting other road users.

In some cases, a collision between the second vehicle and another vehicle may not be avoided.

According to a further embodiment, the method comprises identifying that another vehicle will collide with the second vehicle when being in the barrier position, and controlling the second vehicle to accelerate, or release the brakes of the second vehicle, immediately before the collision. By accelerating the second vehicle in the driving direction or at least release the brakes of the second vehicle, the effects of a collision between the second vehicle and another vehicle hitting the second vehicle from behind will be mitigated.

According to a further embodiment, the method comprises sending the request for a second vehicle from the first vehicle, and, preferably, the request for a second vehicle is generated by detecting a failure of the first vehicle during driving, and that the first vehicle will be operated with a decreased speed along the road or come to a complete stop on the road due to the failure. Hereby, the first vehicle and the need of protection for the first vehicle can be quickly identified. Preferably, the request for a second vehicle is generated in case of a severe failure of the first vehicle, particularly a failure that prevents the first vehicle from safely continue to perform the driving task.

Although any kind of vehicle can be protected by positioning the second vehicle in the barrier position relative to the vehicle to be protected, the first vehicle is suitably an autonomous vehicle.

According to a further embodiment, the method comprises controlling the second vehicle to be positioned in the barrier position when the first vehicle performs a Minimal Risk Manoeuvre (MRM). Hereby, an autonomous vehicle can get protection in case of a fault that cause the autonomous vehicle to stop on the road.

The second vehicle is usually positioned in the barrier position when the first vehicle is stationary, but can also be positioned in the barrier position while driving the second vehicle at the same speed as the first vehicle travels. This can be performed when the first vehicle is to be stopped but has not yet stopped, or when the first vehicle can continue to be driven but for some reason has to be driven with a very low speed along the road.

According to a further embodiment, the method comprises selecting the second vehicle from a vehicle fleet, wherein the position and number of occupants of each vehicle of the vehicle fleet are known by a vehicle fleet management system. Such a vehicle fleet can be for example a vehicle fleet of taxis (Robotaxis) comprising a lot of autonomous vehicles driving in the same area for transportation of people. Hereby, a first vehicle of the vehicle fleet which first vehicle has occupants and has to perform an MRM, can get protection by a second vehicle of the vehicle fleet which second vehicle has no occupants and is controlled into the barrier position relative to the first vehicle.

According to a further embodiment, the method comprises scanning the surroundings of the first vehicle for finding a vehicle to be selected as the second vehicle. Hereby, a second vehicle in close proximity to the first vehicle can be identified and requested to act as a barrier for protecting the first vehicle from being hit by another vehicle.

The invention also relates to a control system for protecting a first vehicle on a road, wherein the control system is configured to receive a request for a second vehicle to protect the first vehicle when the first vehicle will be operated with a decreased speed along the road or come to a complete stop on the road, and in response to the received request, the control system is configured to select the second vehicle being an autonomous vehicle not carrying any occupants, request the second vehicle to act as a barrier for protecting the first vehicle from being hit by another vehicle, and to control the second vehicle to be positioned behind the first vehicle in a barrier position at a distance from the first vehicle.

The advantages of the control system are similar to the advantages already discussed hereinabove with reference to the different embodiments of the method.

Further advantages and advantageous features of the invention are disclosed in the following description and in the claims.

### BRIEF DESCRIPTION OF THE DRAWINGS

With reference to the appended drawings, below follows a more detailed description of embodiments of the invention cited as examples.

In the drawings:
Fig. 1 is a schematic view showing a road, a first vehicle, a second vehicle and a control system, and
Fig. 2 is a schematic view along A-A in Fig. 1, showing an image of a road sign.

### DETAILED DESCRIPTION OF EXAMPLE EMBODIMENTS

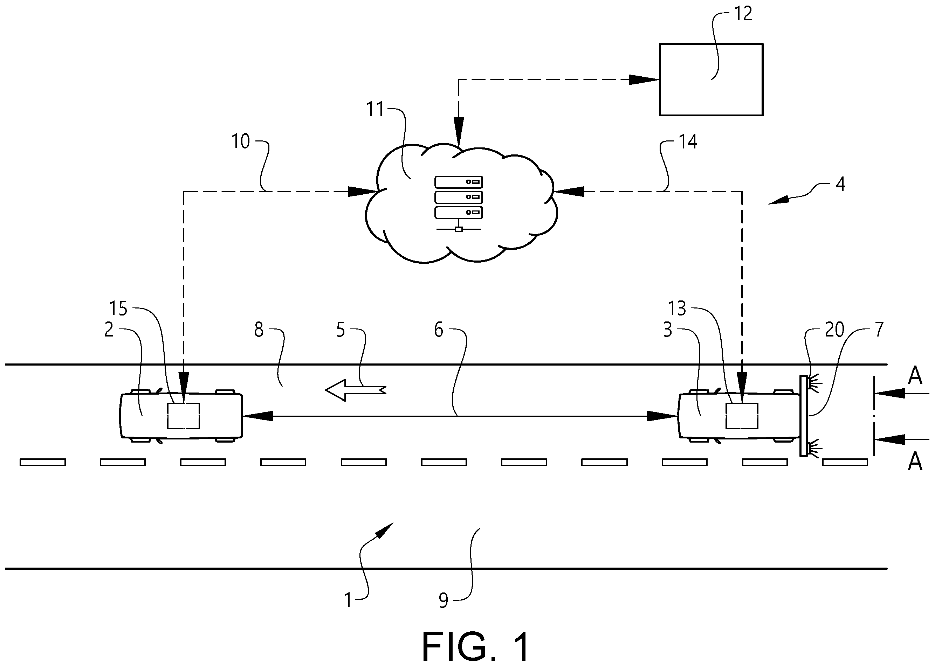

Fig. 1 is a schematical illustration of a road 1 seen from above, a first vehicle 2 and a second vehicle 3 on the road 1, and a control system 4 for protecting the first vehicle 2 on the road 1.

In the example embodiment illustrated in Fig. 1, the first vehicle 2 is an autonomous vehicle which has performed a Minimal Risk Manoeuvre (MRM) and stopped on the road 1. The second vehicle 3 has been positioned behind the first vehicle 2 in a barrier position functioning as a barrier vehicle. The normal direction of driving on the road 1 is indicated by an arrow 5. A distance 6 between the first vehicle 2 and the second vehicle 3 can be adapted to the type of road 1, the speed limit on the road 1 or other relevant traffic conditions. The distance 6 can be for example in the range 10-100 meters, preferably 20-80 meters. As an example only, at a road where the speed limit is 110 km/h, the distance can be 60-70 meters.

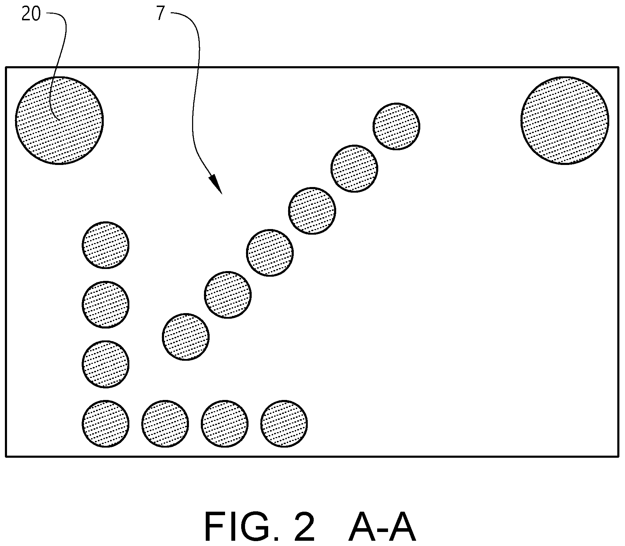

As also is shown in Fig. 2 taken along A-A in Fig. 1, the second vehicle 3 can provide an image 7 of a road sign for road users. The road sign suitably shows the mandatory travel direction or lane, i.e. the vehicles driving in a first lane 8 where the second vehicle 3 is positioned in the barrier position, are directed (by an arrow) to a second lane 9. The road sign can be arranged in the rear of the second vehicle 3 as shown in Fig. 1. The road sign can be a conventional road sign or the image 7 of the road sign can be created by using laser projection on a fog screen, for instance, or by OLED panels or similar which also can be used as lighting. Such a road sign can be supplemented with warning signals 20 by light and/or sound provided by the second vehicle 3 to increase the attention of the road users.

The second vehicle 3 can be arranged to identify that another vehicle will collide with the second vehicle 3 when being in the barrier position. If such a collision cannot be avoided, the second vehicle 3 can be controlled to release the brakes of the second vehicle 3 immediately before the collision to mitigate the collision between the second vehicle 3 and the other vehicle. The second vehicle 3 can also be accelerated in the driving direction 5 immediately before the collision to further mitigate the collision between the second vehicle 3 and the other vehicle.

The control system 4 is configured to receive a request 10 for a second vehicle 3 to protect the first vehicle 2 when the first vehicle 2 will be operated with a decreased speed along the road 1 or come to a complete stop on the road 1 as illustrated in Fig. 1.

The expression "stop on the road" is intended to comprise when the first vehicle has to stop in any lane, from the not right-most lane (very unsafe) to the right-most lane (medium unsafe) and when to stop in a shoulder (least unsafe) or at the roadside, but not when the first vehicle has to stop in a rest area, at a gas station or similar.

Further, in addition to failures of the first vehicle and performing of MRM, the first vehicle can come to a stop due to a traffic accident or a traffic jam. For example, the first vehicle can be involved in a traffic accident where the first vehicle remains in the middle of the roadway after a collision or a single-vehicle accident, and therefore needs protection by a barrier vehicle.

In response to the received request 10, the control system 4 is configured to select the second vehicle 3 being an autonomous vehicle not carrying any occupants, request the second vehicle 3 to act as a barrier for protecting the first vehicle 2 from being hit by another vehicle, and to control the second vehicle 3 to be positioned behind the first vehicle 2 in the barrier position at the distance 6 from the first vehicle 2. The selected second vehicle 3 is suitably an autonomous vehicle which is located in an area relatively close to the first vehicle 2, if possible, such that the time for positioning the second vehicle 3 in the barrier position is as short as possible.

In this context, it is stressed that "a second vehicle" should be interpreted as "at least one second vehicle", since in some cases two or more second vehicles can be selected and requested to act as a barrier for protecting the first vehicle from being hit by another vehicle. For example, the position of the first vehicle may require several second vehicles for protecting the first vehicle and/or directing other vehicles in a safe way.

The control system 4 suitably comprises a central control unit 11 configured to receive the request 10 for a second vehicle 3 to protect the first vehicle 2, select the second vehicle 3, and request the second vehicle 3 to act as a barrier for protecting the first vehicle 2 from being hit by another vehicle.

The central control unit 11 can be part of a server of a wireless network, such as Internet, for cloud computing, i.e. cloud services, or the central control unit 11 can be part a telematic solution that includes cloud services. The central control unit 11 can have information about vehicles in traffic, such as position of the vehicle, number of occupants in the vehicle, etc., for selecting a suitable second vehicle 3 when requested. For example, vehicles of a vehicle fleet, can be used. The vehicle fleet can be managed by a vehicle fleet management system 12 which tracks the position of each vehicle and whether or not the vehicle has occupants. The relevant information is transferred from the vehicle fleet management system 12 to the central control unit 11.

When the central control unit 11 receives the request 10 for a second vehicle 3, the central control unit 11 selects the second vehicle 3 and requests the second vehicle 3 to act as a barrier for protecting the first vehicle 2 from being hit by another vehicle. The control system 4 can comprise a control unit 13 arranged in the second vehicle 3. The central control unit 11 sends the request 14 to the control unit 13 of the second vehicle 3.

The request 14 suitably contains an identification and position of the first vehicle 2, and an instruction that the second vehicle 3 has to act as a barrier for the first vehicle 2. The control unit 13 of the second vehicle can be configured to thereafter control the second vehicle 3 to be positioned in the barrier position based on the request 14 received from the central control unit 11. The self-driving ability of the second vehicle 3 is used when the second vehicle 3 is driven to the first vehicle 2 and when the second vehicle 3 is positioned in the barrier position behind the first vehicle 2.

Optionally, the control unit 13 of the second vehicle 3 can send a confirmation to the central control unit 11 that the second vehicle 3 is successfully positioned in the barrier position. Thereafter, the second vehicle 3 is maintained in the barrier position until the control unit 13 of the second vehicle 3 receives a message from the central control unit 11 that the second vehicle 3 does not longer need to act as barrier and is free to leave.

The request 10 for the second vehicle 3 to protect the first vehicle 2 can be sent from the first vehicle 2. The first vehicle 2 may comprise a control unit 15 that is configured to send the request 10 for a second vehicle 3 to protect the first vehicle 2. This request 10 is suitably sent from the control unit 15 of the first vehicle 2 to the central control unit 11 of the control system 4 and may also contain the position of the first vehicle 2 and/or an identification of the first vehicle 2.

The request 10 is suitably sent from the control unit 15 of the first vehicle 2 when detecting a failure that prevents the first vehicle 2 from safely continuing the driving as planned. At the same time an error message indicating the failure of the first vehicle 2 could optionally be sent to get help with repair and/or towing of the first vehicle 2.

Alternatively, the first vehicle 2 can be equipped for scanning the surroundings of the first vehicle 2 for finding a vehicle to be selected as the second vehicle 3. In such a case, when a second vehicle 3 to be selected can be found by the first vehicle 2, the request to act as a barrier for protecting the first vehicle 2 from being hit by another vehicle could be sent by the first vehicle 2 directly to the second vehicle 3, or information about the selected second vehicle 3 is sent (together with the position of the first vehicle 2 and/or an identification of the first vehicle 2) from the first vehicle 2 to the central control unit 11, whereafter the central control unit 11 communicates with the second vehicle 3 as previously described.

The central control unit 11, the control unit 15 of the first vehicle 2 and the control unit 13 of the second vehicle 3, may each comprise one or more microprocessors and/or one or more memory devices or any other components for executing computer programs to perform the method described herein. The central control unit 11 and the control unit 13 of the second vehicle 3 are preferably provided with computer programs comprising program code means for performing the steps of any example embodiment of the method described herein.

Telematics and other equipment known to the skilled person can be used for the communication between the central control unit 11 and the control unit 13 of the second vehicle 3, and between the control unit 15 of the first vehicle 2 and the central control unit 11.

It is to be understood that the present invention is not limited to the embodiments described above and illustrated in the drawings; rather, the skilled person will recognize that many changes and modifications may be made within the scope of the appended claims.

## Claims

1. A method for protecting a first vehicle (2) on a road (1), the method comprising receiving a request (10) for a second vehicle (3) to protect the first vehicle when the first vehicle will be operated with a decreased speed along the road or come to a complete stop on the road, and in response to the received request, selecting the second vehicle (3) being an autonomous vehicle not carrying any occupants, requesting the second vehicle (3) to act as a barrier for protecting the first vehicle (2) from being hit by another vehicle, and controlling the second vehicle (3) to be positioned behind the first vehicle (2) in a barrier position at a distance (6) from the first vehicle (2).

2. A method according to claim 1, **characterized by** sending the request (10) for a second vehicle (3) from the first vehicle (2).

3. A method according to claim 2, wherein the request (10) for a second vehicle (3) is generated by detecting a failure of the first vehicle (2) during driving, and that the first vehicle will be operated with a decreased speed along the road (1) or come to a complete stop on the road due to the failure.

4. A method according to any preceding claim, **characterized by** selecting the second vehicle (3) from a vehicle fleet, the position and number of occupants of each vehicle of the vehicle fleet being known by a vehicle fleet management system (12).

5. A method according to any of claims 1-3, **characterized by** scanning the surroundings of the first vehicle (2) for finding a vehicle to be selected as the second vehicle (3).

6. A method according to any preceding claim, wherein the first vehicle (2) is an autonomous vehicle.

7. A method according to claim 6, **characterized by** controlling the second vehicle (3) to be positioned in the barrier position when the first vehicle (2) performs a Minimal Risk Manoeuvre (MRM).

8. A method according to any of claims 1-6, **characterized by** controlling the second vehicle (3) to be positioned in the barrier position while driving the second vehicle at the same speed as the first vehicle (2) travels.

9. A method according to any of claims 1-7, **characterized by** controlling the second vehicle (3) to be positioned in the barrier position when the first vehicle (2) is stationary.

10. A method according to any preceding claim, **characterized by** controlling the second vehicle (3) when being in the barrier position, to perform an action for preventing or mitigating a collision between the second vehicle and another vehicle.

11. A method according to claim 10, **characterized by** controlling the second vehicle (3) to provide an image (7) of a road sign for road users.

12. A method according to claim 10 or 11, **characterized by** controlling the second vehicle (3) to provide warning signals (20) by light and/or sound to road users.

13. A method according to any of claims 10-12, **characterized by** identifying that another vehicle will collide with the second vehicle (3) when being in the barrier position, and controlling the second vehicle (3) to accelerate immediately before the collision.

14. A method according to any of claims 10-13, **characterized by** identifying that another vehicle will collide with the second vehicle (3) when being in the barrier position, and controlling the second vehicle (3) to release the brakes of the second vehicle immediately before the collision.

15. A control system (4) for protecting a first vehicle (2) on a road (1), the control system being configured to receive a request (10) for a second vehicle (3) to protect the first vehicle (2) when the first vehicle will be operated with a decreased speed along the road or come to a complete stop on the road, and in response to the received request (10), the control system (4) being configured to select the second vehicle (3) being an autonomous vehicle not carrying any occupants, request the second vehicle (3) to act as a barrier for protecting the first vehicle (2) from being hit by another vehicle, and to control the second vehicle (3) to be positioned behind the first vehicle (2) in a barrier position at a distance (6) from the first vehicle (2).

16. A control system according to claim 15, **characterized in that** the control system (4) comprises a central control unit (11) configured to receive the request (10) for a second vehicle (3) to protect the first vehicle (2), select the second vehicle (3), and request the second vehicle (3) to act as a barrier for protecting the first vehicle (2) from being hit by another vehicle.

17. A control system according to claim 15 or 16, **characterized in that** the control system (4) comprises a control unit (13) arranged in the second vehicle (3), the control unit (13) of the second vehicle (3) being configured to control the second vehicle to be positioned in the barrier position.
